# EUROPÄISCHE PATENTSCHRIFT

(11) **EP 0 928 390 B1**
(45) Veröffentlichungstag und Bekanntmachung des Hinweises auf die Patenterteilung: **17.04.2002**
(21) Anmeldenummer: 97910313.2
(22) Anmeldetag: 19.09.1997
(51) Int. Cl.: F16L 33/24, F16L 33/00

(54) **HOCHDRUCKSCHLAUCH MIT EINER ARMATUR ZUM ANSCHLIESSEN AN EIN KORRESPONDIERENDES ANSCHLUSSTEIL**
HIGH PRESSURE TUBE WITH A FITTING TO CONNECT IT TO A CORRESPONDING CONNECTING PART
TUYAU SOUPLE POUR HAUTE PRESSION POURVU D'UN RACCORD PERMETTANT SON RACCORDEMENT A UNE PARTIE DE RACCORDEMENT CORRESPONDANTE

(30) Priorität: 24.09.1996 DE 19639055
(43) Veröffentlichungstag der Anmeldung: 14.07.1999
(73) Patentinhaber: Alfred Kärcher GmbH & Co., D-71364 Winnenden (DE)
(72) Erfinder: NATHAN, Robert, D-71522 Backnang (DE); WESCH, Johann, G., D-73663 Berglen (DE); SCHEEF, Emil, D-71336 Waiblingen (DE)
(74) Vertreter: Hoeger, Stellrecht & Partner
(86) Internationale Anmeldenummer: EP9705147
(87) Internationale Veröffentlichungsnummer: WO9813638

(56) Entgegenhaltungen:
- DE-C- 881 132
- DE-C- 913 601
- US-A- 2 561 351

## Beschreibung

Die Erfindung betrifft einen Hochdruckschlauch mit einer Armatur zum Anschließen an ein korrespondierendes Anschlußteil, wobei die Armatur ein Verbindungselement zum Herstellen einer Verbindung mit dem Hochdruckschlauch und ein Kupplungselement zum Herstellen einer Nippel-/Hülsenverbindung mit dem Anschlußteil aufweist, wobei das Verbindungselement als Rohrstutzen ausgebildet ist, in den ein Endbereich des Hochdruckschlauchs eintaucht, und die Armatur einen Formschluß mit dem Hochdruckschlauch ausbildet, und wobei der Hochdruckschlauch eine elastische Schlauchseele umfaßt, die zur Aufnahme der am Hochdruckschlauch auftretenden Zugkräfte von einem Schlauchgeflecht oder einem Schlauchgewebe umgeben ist, in das die Armatur eingreift.

Hochdruckschläuche mit einer Armatur zum Anschließen an ein korrespondierendes Anschlußteil sind beispielsweise aus den deutschen Gebrauchsmusterschriften DE 86 24 198 U1 und DE 86 24 670 U1 sowie aus den deutschen Patentschriften Nr. 881 132 und Nr. 913 601 bekannt. Hierbei kommen zum Herstellen einer Verbindung zwischen dem Hochdruckschlauch und der Armatur ein in das Schlauchende hineinragender Nippel und eine das Schlauchende im Bereich des Nippels umfassende und dichtend gegen den Nippel pressende Klemmhülse zum Einsatz. Eine derartige Ausgestaltung hat den Nachteil, daß die Herstellung der Verbindung zwischen Schlauch und Armatur relativ aufwendig ist, da das Schlauchende in den ringförmigen Bereich zwischen Nippel und Preßhülse mit einer beträchtlichen Kraft eingepreßt werden muß; dies läßt sich in der Regel nur unter Verwendung von zusätzlichem Werkzeug bewerkstelligen und ist mit nicht unerheblichen Kosten verbunden.

Aus der US-Patentschrift Nr. 2,561,351 ist ein Hochdruckschlauch bekannt, der eine Schlauchseele aufweist, die von einem Schlauchgewebe oder Schlauchgeflecht umgeben ist. Eine Armatur zum Anschließen an ein korrespondierendes Anschlußteil greift in das Schlauchgewebe ein. Zum Herstellen des Hochdruckschlauchs mit der Anschlußarmatur kann ein Endbereich des Hochdruckschlauchs in eine Gießform eingelegt und anschließend der Endbereich mit Kunststoff umgossen werden. Das zunächst zähflüssige Kunststoffmaterial fließt dabei in die Zwischenräume des Schlauchgeflechts und härtet anschließend in der Form einer Anschlußarmatur aus. Die Verbindung zwischen Hochdruckschlauch und Armatur läßt sich somit relativ einfach herstellen und in vielen Fällen genügt eine derartige Verbindung auch den Anforderungen hinsichtlich mechanischer Stabilität und Dichtheit. Insbesondere bei sehr hohen Druckbelastungen des Hochdruckschlauchs ist es allerdings wünschenswert, die Verbindung mechanisch stabiler auszugestalten.

Aufgabe der vorliegenden Erfindung ist es, einen Hochdruckschlauch mit einer Armatur zum Anschließen an ein korrespondierendes Anschlußteil derart auszugestalten, daß bei dessen Montage in kostengünstiger Weise innerhalb kurzer Zeit eine auch hohen Druckbelastungen zuverlässig standhaltende Verbindung zwischen Hochdruckschlauch und Armatur hergestellt werden kann.

Diese Aufgabe wird bei einem Hochdruckschlauch mit einer Armatur der eingangs genannten Art erfindungsgemäß dadurch gelöst, daß der Flechtwinkel des Schlauchgeflechts ungefähr 30° bis 60° beträgt. Die Erfindung macht sich die Erkenntnis zunutze, daß die im Hochdruckschlauch selbst auftretenden Kräfte bei dessen Druckbeaufschlagung zur Unterstützung der Verbindung zwischen Hochdruckschlauch und Armatur genutzt werden können. Wird der Hochdruckschlauch bei seinem Betrieb mit einem hohen Druck beaufschlagt, so dehnt er sich dadurch aus und wird mit seinem Endbereich gegen den Rohrstutzen gedrückt, wobei aufgrund des Formschlusses eine dichte Verbindung zwischen Schlauch und Armatur hergestellt wird. Zusätzliche, den Hochdruckschlauch umgebende Preß- oder Klemmhülsen zur Festlegung des Schlauches an der Armatur können somit entfallen. Der Rohrstutzen kann unverdrehbar mit dem Kupplungselement verbunden sein, so daß die Armatur keine beweglichen Teile aufweist und deshalb sehr robust ausgestaltet werden kann.

Der Hochdruckschlauch umfaßt eine elastische Schlauchseele, die von einem Schlauchgeflecht oder Schlauchgewebe umgeben ist zur Aufnahme der am Hochdruckschlauch auftretenden Zugkräfte, und die Armatur greift in das Schlauchgeflecht ein. Das Schlauchgeflecht oder -gewebe bildet ein Verstärkungselement für den Hochdruckschlauch, das im Verhältnis zur elastisch ausgebildeten Schlauchseele eine rauhe Oberfläche aufweist, in die die Armatur eingreift und dadurch einen Formschluß herstellt. Wird der Hochdruckschlauch mit einem hohen Druck beaufschlagt, so versucht sich die innenliegende Schlauchseele auszudehnen und drückt dadurch das Schlauchgeflecht nach außen gegen die Armatur, die mit dem Schlauchgeflecht einen Formschluß ausbildet. Durch die Druckbeaufschlagung wird der Formschluß verstärkt und damit eine dichte Verbindung zwischen Schlauch und Armatur hergestellt.

Eine besonders stabile Verbindung zwischen Armatur und Hochdruckschlauch ergibt sich dadurch, daß der Flechtwinkel des Schlauchgeflechts ungefähr 30° bis 60° beträgt, denn dadurch erhält das Schlauchgeflecht bei Druckbeaufschlagung eine sehr starre und stabile Form.

Günstig ist es, wenn das Kupplungselement einen in radialer Richtung elastisch verformbaren Schlauchnippel aufweist und die Schlauchseele des Hochdruckschlauchs vom Schlauchgeflecht oder -gewebe freigelegt in den Schlauchnippel eintaucht. Bei einer derartigen Ausgestaltung durchgreift der Hochdruckschlauch die gesamte Armatur, die endseitig einen Schlauchnippel umfaßt, der in ein Anschlußteil einschiebbar ist, beispielsweise in den druckseitigen Auslaß eines Hochdruckreinigungsgeräts. Im Bereich des in den Schlauchnippel eintauchenden Endes des Hochdruckschlauchs ist das die Schlauchseele umgebende Schlauchgeflecht oder -gewebe entfernt, so daß sich der Hochdruckschlauch bei Druckbeaufschlagung im Bereich des Schlauchnippels radial ausdehnen kann. Diese Ausdehnung wird auf den elastisch ausgebildeten Schlauchnippel übertragen, so daß sich auch dieser in radialer Richtung geringfügig ausdehnen und dadurch eine besonders dichte Verbindung mit dem Anschlußteil eingehen kann. Bei einer derartigen Ausgestaltung werden somit die im Hochdruckschlauch bei dessen Betrieb auftretenden Druckkräfte nicht nur zur Befestigung des Schlauchs an der Armatur genutzt, sondern zusätzlich auch zur Ausbildung einer besonders dichten Verbindung zwischen Armatur und Anschlußteil.

Es kann vorgesehen sein, daß zwischen Hochdruckschlauch und Armatur in einem vom Schlauchgeflecht oder -gewebe freigelegten Bereich ein Dichtelement angeordnet ist. Wie voranstehend beschrieben, dehnt sich der Hochdruckschlauch in seinem vom Schlauchgeflecht oder -gewebe freigelegten Bereich in radialer Richtung bei Druckbeaufschlagung aus. Dies hat zur Folge, daß das zwischen Hochdruckschlauch und Armatur angeordnete Dichtelement gegen die den Schlauch umgebende Armatur gedrückt wird. Dies wiederum hat zur Folge, daß der Hochdruckschlauch eine besonders dichte Verbindung mit der Armatur eingeht.

Bei einer kostengünstig herstellbaren Ausführungsform ist vorgesehen, daß der Rohrstutzen und das Kupplungsteil einstückig als Kunststoffteil ausgebildet sind.

Bei einer besonders bevorzugten Ausgestaltung der Erfindung ist vorgesehen, daß das Kunststoffteil ein Spritzteil ist, das um den Endbereich des Hochdruckschlauchs herumgespritzt ist. Bei einer derartigen Ausgestaltung ist es besonders vorteilhaft, wenn zunächst das Schlauchgeflecht oder -gewebe des Hochdruckschlauchs in seinem Endbereich freigelegt und anschließend dieser Endbereich mit Kunststoff so umspritzt wird, daß das Kunststoffmaterial unmittelbar in das Schlauchgeflecht oder -gewebe eingreift und dadurch einen Formschluß herstellt. Bei Druckbeaufschlagung wird das Schlauchgeflecht oder -gewebe von der innenseitig angeordneten elastischen Schlauchseele gegen das Kunststoff-Spritzteil gedrückt und dadurch an diesem festgelegt. Da der Rohrstutzen und das Kupplungsteil einstückig als Kunststoff-Spritzteil ausgebildet sind, entfallen bei der Herstellung der Armatur zusätzliche Metallteile, die üblicherweise mittels spanabhebender Werkzeuge aufwendig hergestellt werden müssen. Demgegenüber ist das Umspritzen des Hochdruckschlauchs mit einem freigelegten Schlauchgeflecht oder -gewebe sehr kostengünstig und bewirkt gleichzeitig eine stabile und dichte Verbindung zwischen Schlauch und Armatur.

Die Herstellung des Schlauchs und der Armatur lassen sich vereinfachen, indem die Schlauchseele oder eine das Schlauchgeflecht oder -gewebe umgebende Schlauchumhüllung aus demselben Kunststoff gefertigt sind wie das Spritzteil. Hierbei kann vorgesehen sein, daß das Kunststoff-Spritzteil zusätzlich einer aushärtenden Nachbehandlung unterzogen ist.

Bei einer vorteilhaften Ausführungsform ist vorgesehen, daß der Hochdruckschlauch in seinem Endbereich mindestens eine seitliche Durchbrechung aufweist, in die das Spritzteil eingreift. Der Formschluß zwischen Rohrstutzen und Hochdruckschlauch kann bei einer derartigen Ausgestaltung dadurch erzielt werden, daß beim Umspritzen des Endbereichs des Hochdruckschlauchs Kunststoffmaterial in die Durchbrechungen eindringt.

Ein zusätzlicher Formschluß kann dadurch erzielt werden, daß auf der Innenseite des Rohrstutzens mindestens ein Vorsprung angeordnet ist.
Eine besonders stabile Verbindung zwischen Hochdruckschlauch und Armatur wird bei einer vorteilhaften Ausgestaltung dadurch erzielt, daß die Armatur ein in den Hochdruckschlauch einführbares und diesen radial erweiterndes elastisches Dehnelement umfaßt. Mit Hilfe des elastischen Dehnelements wird der Hochdruckschlauch zusätzlich mit einer Radialkraft beaufschlagt, durch die der Hochdruckschlauch gegen den ihm umgebenden Rohrstutzen gedrückt wird. Dies hat zur Folge, daß auch ohne Belastung des Schlauches mit einem hohen Druck eine stabile Verbindung zwischen Schlauch und Armatur vorliegt. Hierbei ist es besonders vorteilhaft, wenn das Dehnelement in Höhe eines an der Innenseite des Rohrstutzens angeordneten Rücksprungs innerhalb des Hochdruckschlauchs angeordnet ist. Dadurch wird der Hochdruckschlauch mittels des Dehnelements in den Rücksprung des Rohrstutzens eingepreßt und eine besonders dauerhafte Verbindung zwischen Schlauch und Rohrstutzen erzeugt.

Vorteilhaft ist es, wenn das Dehnelement einen sich konisch erweiternden Bereich umfaßt, da dadurch der Rohrstutzen nicht nur mit einer Radialkraft, sondern zusätzlich mit einer in axialer Richtung wirkenden Kraft beaufschlagt wird, denn der konisch erweiternde Bereich bewirkt eine Richtungsänderung der vom Dehnelement auf den Schlauch und von diesem zum Beispiel auf den Rohrstutzen übertragenen Kraft.

Das Dehnelement kann beispielsweise als in den Hochdruckschlauch einführbarer elastischer Ring ausgebildet sein.

Bei einer vorteilhaften Ausführungsform ist vorgesehen, daß das Dehnelement als in den Hochdruckschlauch einführbare Dehnhülse ausgebildet ist. Eine derartige Ausgestaltung hat den Vorteil, daß dadurch der Hochdruckschlauch endseitig besonders stabil ausgebildet ist.

Um auf kostengünstige Weise sicherzustellen, daß der Schlauch bei Druckbelastung nicht in seinem an die Armatur anschliessenden Bereich abknickt, ist bei einer besonders bevorzugten Ausführungsform der Erfindung vorgesehen, daß die Armatur einen einstückig mit dem Rohrstutzen verbundenen Knickschutz aus Kunststoff umfaßt. Rohrstutzen, Kupplungsteil und Knickschutz lassen sich somit in einem Arbeitsgang durch Umspritzen des Endbereichs des Hochdruckschlauchs herstellen.

Die nachfolgende Beschreibung bevorzugter Ausführungsformen der Erfindung dient im Zusammenhang mit der Zeichnung der näheren Erläuterung. Es zeigen:
- Figur 1:: eine schematische Längsschnittansicht eines ersten bevorzugten Ausführungsbeispiels eines Hochdruckschlauchs mit einer Armatur zum Anschließen an ein korrespondierendes Anschlußteil;
- Figur 2:: eine schematische Längsschnittansicht eines zweiten Ausführungsbeispiels;
- Figur 3:: eine schematische Längsschnittansicht eines dritten Ausführungsbeispiels und
- Figur 4:: eine schematische Längsschnittansicht eines vierten Ausführungsbeispiels.

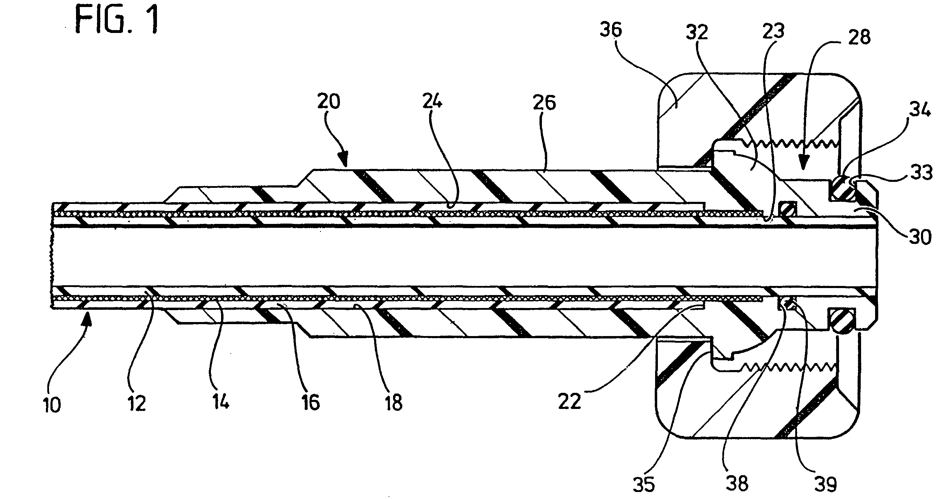

Der Aufbau des Endstücks eines Hochdruckschlauchs mit einer Armatur zum Anschließen an ein korrespondierendes Anschlußteil ist in Figur 1 dargestellt. Der Hochdruckschlauch 10 ist aus drei Schichten aufgebaut in Form einer innenseitig angeordneten Schlauchseele 12, die aus einem elastischen Kunststoff gefertigt ist und von einem die im Hochdruckschlauch auftretenden Druckkräfte aufnehmenden Schlauchgeflecht 14 umgeben ist, an das sich außenseitig eine ebenfalls aus Kunststoff gefertigte Schlauchumhüllung 16 anschließt. Der Hochdruckschlauch 10 durchgreift eine Durchgangsbohrung 18 einer ebenfalls aus Kunststoff gefertigten Armatur 20, wobei sich die Durchgangsbohrung 18 über eine Stufe 22 verengt und dadurch einen vorderen Abschnitt 23 mit kleinerem Durchmesser und einen hinteren Abschnitt 24 mit erweitertem Durchmesser aufweist. Die Armatur 20 ist in Höhe des hinteren Abschnitts 24 als Rohrstutzen 26 ausgebildet und weist in Höhe des vorderen Abschnitts 23 ein Kupplungsteil 28 mit einem Schlauchnippel 30 und einem in Umfangsrichtung umlaufenden Wulst 32 auf. Am Schlauchnippel 30 ist eine in Umfangsrichtung umlaufende Ringnut 33 angeordnet, in die ein O-Ring 34 eingelegt ist. Der Wulst 32 springt an seiner dem Schlauchnippel 30 abgewandten Seite stufig zurück und bildet eine Anschlagsfläche 35 für eine Überwurfmutter 36 aus, die den Wulst 32 and den Schlauchnippel 30 im Abstand umgibt. Der Schlauchnippel 30 ist in ein nicht weiter dargestelltes Anschlußteil einschiebbar, wobei es sich hierbei beispielsweise um den druckseitigen Auslaß eines Hochdruckreinigungsgeräts handeln kann. Die Überwurfmutter 36 kann auf ein in der Zeichnung nicht dargestelltes Verbindungsteil aufgeschraubt werden, so daß dadurch eine dichte Verbindung zwischen der Armatur 20 und dem in der Zeichnung nicht dargestellten Anschlußteil herstellbar ist.

In Höhe des vorderen Abschnitts 23 wurde vom Hochdruckschlauch 10 die Schlauchumhüllung 16 entfernt und zusätzlich wurde in Höhe des Schlauchnippels 30 die Schlauchseele 12 freigelegt, so daß diese unmittelbar an der Innenseite des Schlauchnippels 30 anliegt, während in Höhe des Wulstes 32 das Schlauchgeflecht 14 freiliegt, so daß die Armatur 20 in diesem Bereich unmittelbar am Schlauchgeflecht 14 zur Anlage kommt.

Im Bereich zwischen Schlauchnippel 30 und Wulst 32 ist in die Wand der Durchgangsbohrung 18 eine in Umfangsrichtung umlaufende U-förmige Nut 38 eingeformt, in die ein Dichtring 39 eingelegt ist.

Die Armatur 20 mit dem Rohrstutzen 26 und dem Kupplungsteil 28 ist als Kunststoff-Spritzteil ausgebildet, das um den Endbereich des Hochdruckschlauchs herumgespritzt ist. Zur Ausbildung eines Formschlusses zwischen Armatur 20 und Hochdruckschlauch 10 wird zuerst das Schlauchgeflecht 14 freigelegt, so daß beim Umspritzen des Hochdruckschlauchs 10 das Kunststoffmaterial unmittelbar mit dem Schlauchgeflecht in Kontakt kommt, in dieses eindringen kann und dadurch einen Formschluß ausbildet.

Beim Betrieb des Hochdruckschlauchs 10 wird dieser innenseitig mit einem hohen Druck beaufschlagt, der zur Folge hat, daß sich die elastische Schlauchseele in radialer Richtung ausdehnt und dadurch das freigelegte Schlauchgeflecht 14 in Höhe des Wulstes 32 gegen die Armatur 20 drückt, so daß der Hochdruckschlauch 10 unverschieblich an der Armatur 20 festgelegt wird. Die Ausdehnung der elastischen Schlauchseele 12 hat außerdem zur Folge, daß sich diese dichtend an die Innenseite des Schlauchnippels 30 anlegt und diesen mit einer radial nach außen gerichteten Kraft beaufschlagt, so daß der Schlauchnippel 30, der beim Betrieb des Hochdruckschlauchs 10 in das in der Zeichnung nicht dargestellte Anschlußteil eingeschoben ist, dicht an der Innenseite des Anschlußteils anliegt. Der beim Betrieb im Innern des Hochdruckschlauchs herrschende Druck dient somit zum einen zur Festlegung des Hochdruckschlauchs 10 an der Armatur 20 und zum anderen zur Ausbildung einer dichten Verbindung sowohl zwischen Hochdruckschlauch 10 und Armatur 20 als auch zwischen Schlauchnippel 30 und korrespondierendem Anschlußteil.

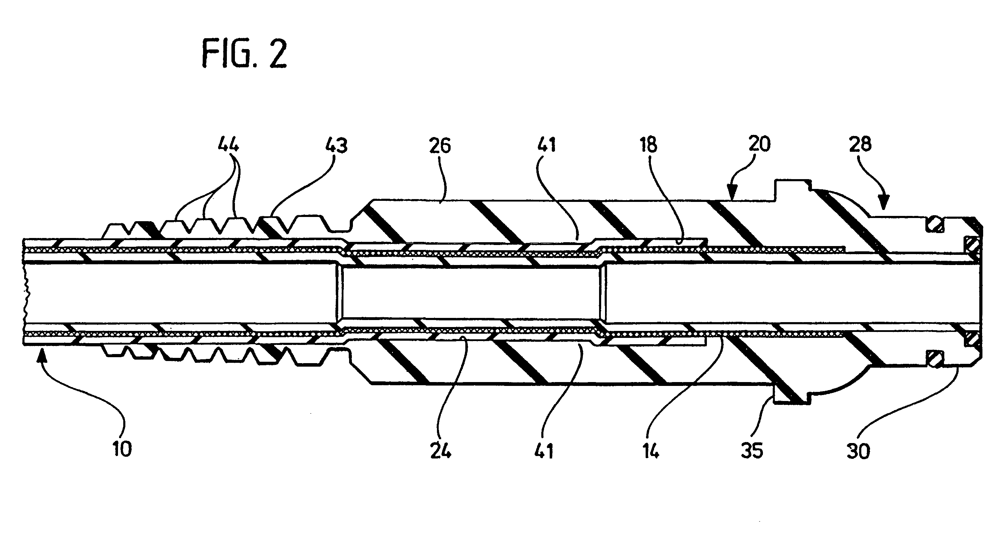

Weitere vorteilhafte Ausführungsformen eines Hochdruckschlauchs mit einer Armatur zum Anschließen an ein korrespondierendes Anschlußteil sind in den Figuren 2, 3 und 4 dargestellt. Diese abgewandelten Ausführungsformen entsprechen weitgehend der in Figur 1 dargestellten Ausgestaltung, einander entsprechende Teile tragen deshalb auch dieselben Bezugszeichen wie in Figur 1.

Der besseren Deutlichkeit willen ist in den Figuren 2, 3 und 4 die Überwurfmutter 36, die jeweils an einer Anschlagsfläche 35 zur Anlage kommt, nicht dargestellt. Zur Herstellung einer Verbindung zwischen der Armatur 20 und einem in der Zeichnung nicht dargestellten Anschlußteil kommt jedoch auch bei den in den Figuren 2, 3 und 4 dargestellten Ausführungsformen jeweils eine Überwurfmutter zum Einsatz, die eine lösbare Verbindung herstellt zwischen dem Schlauchnippel 30 und dem in der Zeichnung nicht dargestellten Anschlußteil.

Während bei dem in Figur 1 dargestellten Ausführungsbeispiel der Rohrstutzen 26 auf seiner Innenseite einen gleichbleibenden Durchmesser aufweist, ist bei dem in Figur 2 dargestellten Ausführungsbeispiel im Bereich des hinteren Abschnitts 24 in der Durchgangsbohrung 18 ein in Umfangsrichtung umlaufender Vorsprung 41 vorgesehen, durch den der Hochdruckschlauch 10 zusätzlich in den Rohrstutzen 26 eingepreßt wird. Der bereits durch den Eingriff der Armatur 20 in das freigelegte Schlauchgeflecht 14 erzeugte Formschluß zwischen Armatur 20 und Hochdruckschlauch 10 wird durch den Vorsprung 41 zusätzlich verstärkt.

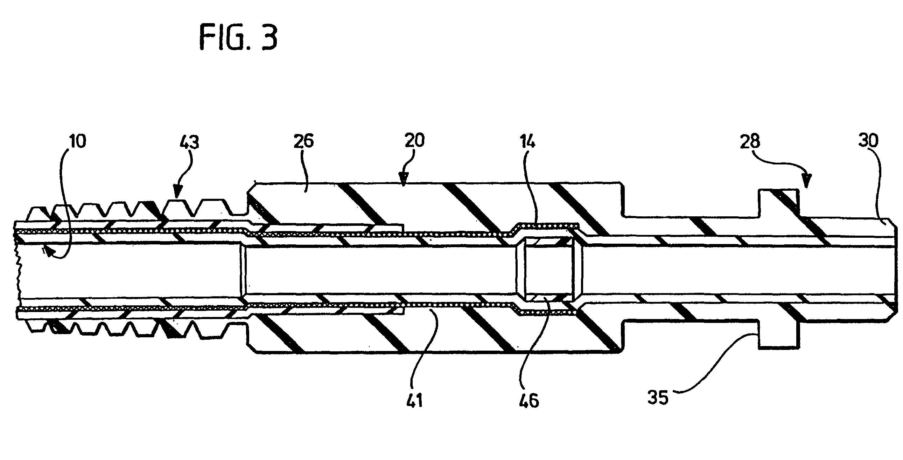

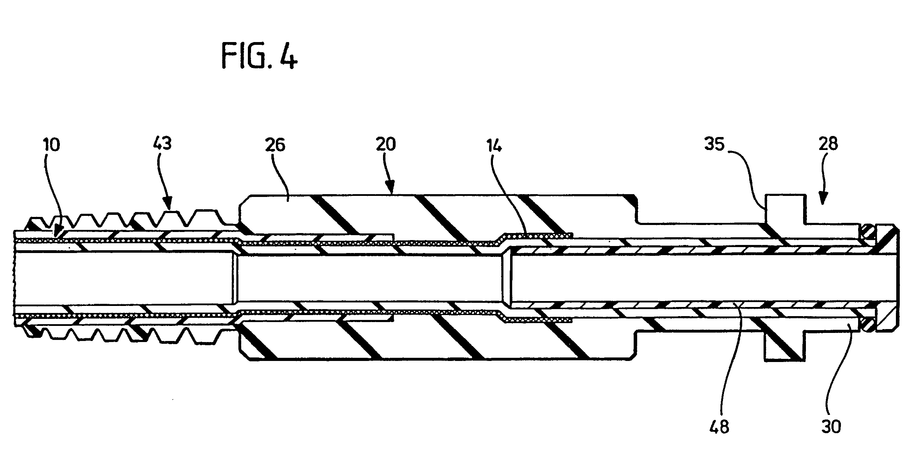

Bei der in Figur 2 dargestellten Ausführungsform ist ebenso wie bei den nachfolgend beschriebenen und in den Figuren 3 und 4 dargestellten Ausführungsformen die Armatur 20 einstükkig mit einem den Hochdruckschlauch umgebenden Knickschutz 43 verbunden in Form mehrerer hintereinander angeordneter und jeweils in Umfangsrichtung umlaufender Rippen 44, deren Materialstärke mit zunehmendem Abstand vom Schlauchnippel 30 abnimmt. Der Knickschutz 43 wird zusammen mit der Armatur 20 durch Umspritzen des Hochdruckschlauches hergestellt.

Bei der in Figur 3 dargestellten Ausführungsform kommt zusätzlich zum Vorsprung 41 zur Erhöhung des Formschlusses zwischen dem Hochdruckschlauch 10 und der Armatur 20 ein innerhalb des Hochdruckschlauchs 10 positionierter, in radialer Richtung ausdehnbarer Spannring 46 zum Einsatz. Der Spannring 46 ist in Höhe des freigelegten Schlauchgeflechts 14 des Hochdruckschlauchs 10 positioniert, so daß durch ihn das Schlauchgeflecht gegen die Armatur 20 gedrückt wird. Dadurch wird sichergestellt, daß der Hochdruckschlauch 10 auch dann an der Armatur 20 festgelegt ist, wenn er nicht mit einem Druck beaufschlagt wird, denn in diesem Fall sorgt der Spannring 46 für die erforderlichen Spannkräfte in radialer Richtung.

Statt eines Spannrings kommt bei dem in Figur 4 dargestellten Ausführungsbeispiel eine in den Hochdruckschlauch 10 einführbare Spannhülse 48 zum Einsatz, die sich bis in Höhe des freigelegten Schlauchgeflechts 14 erstreckt und dieses gegen die Armatur 20 drückt. Durch den Einsatz der Spannhülse 48 erhalten der Hochdruckschlauch 10 und die Armatur 20 in Höhe des Kupplungsteils 28 eine besonders starre Ausgestaltung, wodurch die Herstellung einer Verbindung zwischen Kupplungsteil 28 und in der Zeichnung nicht dargestelltem Anschlußteil vereinfacht wird.

Durch das Freilegen des Schlauchgeflechts 14 und das unmittelbare Umspritzen des Hochdruckschlauchs 10 im freigelegten Bereich wird bei sämtlichen Ausführungsformen auf einfache Weise eine stabile Verbindung zwischen dem Hochdruckschlauch 10 und der Armatur 20 hergestellt, ohne daß zusätzliche Preßund Klemmhülsen verwendet werden müssen.

## Patentansprüche

1. Hochdruckschlauch mit einer Armatur zum Anschließen an ein korrespondierendes Anschlußteil, wobei die Armatur ein Verbindungselement zum Herstellen einer Verbindung mit dem Hochdruckschlauch und ein Kupplungselement zum Herstellen einer Nippel-/Hülsenverbindung mit dem Anschlußteil aufweist, wobei das Verbindungselement als Rohrstutzen ausgestaltet ist, in den ein Endbereich des Hochdruckschlauchs eintaucht, und die Armatur einen Formschluß mit dem Hochdruckschlauch ausbildet, und wobei der Hochdruckschlauch eine elastische Schlauchseele umfaßt, die zur Aufnahme der am Hochdruckschlauch auftretenden Zugkräfte von einem Schlauchgeflecht oder Schlauchgewebe umgeben ist, in das die Armatur eingreift, **dadurch gekennzeichnet, daß** der Flechtwinkel des Schlauchgeflechts (14) ungefähr 30° bis 60° beträgt.

2. Hochdruckschlauch mit einer Armatur nach Anspruch 1, **dadurch gekennzeichnet, daß** das Kupplungselement (28) einen in radialer Richtung elastisch verformbaren Schlauchnippel (30) aufweist und daß die Schlauchseele (12) des Hochdruckschlauchs (10) vom Schlauchgeflecht oder -gewebe freigelegt in den Schlauchnippel (30) eintaucht.

3. Hochdruckschlauch mit einer Armatur nach Anspruch 1 oder 2, **dadurch gekennzeichnet, daß** zwischen Hochdruckschlauch (10) und Armatur (20) in einem vom Schlauchgeflecht (14) oder -gewebe freigelegten Bereich ein Dichtelement (39) angeordnet ist.

4. Hochdruckschlauch mit einer Armatur nach einem der voranstehenden Ansprüche, **dadurch gekennzeichnet, daß** der Rohrstutzen (26) und das Kupplungselement (28) einstükkig als Kunststoffteil ausgebildet sind.

5. Hochdruckschlauch mit einer Armatur nach Anspruch 4, **dadurch gekennzeichnet, daß** das Kunststoffteil ein Spritzteil ist, das um den Endbereich des Hochdruckschlauchs (10) herum gespritzt ist.

6. Hochdruckschlauch mit einer Armatur nach Anspruch 5, **dadurch gekennzeichnet, daß** die Schlauchseele (12) oder eine das Schlauchgeflecht (14) oder -gewebe umgebende Schlauchumhüllung (16) aus demselben Kunststoff gefertigt sind wie das Spritzteil.

7. Hochdruckschlauch mit einer Armatur nach Anspruch 5 oder 6, **dadurch gekennzeichnet, daß** der Hochdruckschlauch (10) in seinem Endbereich mindestens eine seitliche Durchbrechung aufweist, in die das Spritzteil eingreift.

8. Hochdruckschlauch mit einer Armatur nach einem der voranstehenden Ansprüche, **dadurch gekennzeichnet, daß** auf der Innenseite des Rohrstutzens mindestens ein Vorsprung (41) angeordnet ist.

9. Hochdruckschlauch mit einer Armatur nach einem der voranstehenden Ansprüche, **dadurch gekennzeichnet, daß** die Armatur (20) ein in den Hochdruckschlauch (10) einführbares und diesen radial erweiterndes elastisches Dehnelement (46; 48) umfaßt.

10. Hochdruckschlauch mit einer Armatur nach Anspruch 9, **dadurch gekennzeichnet, daß** das Dehnelement einen sich konisch erweiternden Bereich umfaßt.

11. Hochdruckschlauch mit einer Armatur nach Anspruch 9 oder 10, **dadurch gekennzeichnet, daß** das Dehnelement als in den Hochdruckschlauch (10) einführbarer elastischer Ring (46) ausgebildet ist.

12. Hochdruckschlauch mit einer Armatur nach Anspruch 9 oder 10, **dadurch gekennzeichnet, daß** das Dehnelement als in den Hochdruckschlauch (10) einführbare Dehnhülse (48) ausgebildet ist.

13. Hochdruckschlauch mit einer Armatur nach einem der Ansprüche 4 bis 12, **dadurch gekennzeichnet, daß** die Armatur (20) einen einstückig mit dem Rohrstutzen verbundenen Knickschutz (43) aus Kunststoff umfaßt.

## Claims

1. A high-pressure hose with a fitting for attachment to a corresponding attachment part, wherein the fitting comprises a connexion member for forming a connexion to the high-pressure hose and a coupling member for forming a nipple / sleeve connexion to the attachment part, wherein the connexion member is designed in the form of a tube socket into which an end region of the high-pressure hose enters, and the fitting forms a positively locking connexion with the high-pressure hose. and wherein the high-pressure hose comprises a resilient core which - in order to absorb the tensile forces occurring at the high-pressure hose - is surrounded by a braided or woven hose fabric into which the fitting engages, **characterized in that** the braiding angle of the braided hose fabric (14) is from about 30° to 60°.

2. A high-pressure hose with a fitting according to Claim 1, **characterized in that** the coupling member (28) has a hose stem (30) resiliently deformable in the radial direction. and the core (12) of the high-pressure hose (10) entering the hose stem (30) is free of the braided or woven hose fabric.

3. A high-pressure hose with a fitting according to Claim 1 or 2, **characterized in that** a sealing member (39) is arranged between the high-pressure hose (10) and the fitting (20) in a region free of the braided hose fabric (14) or woven hose fabric.

4. A high-pressure hose with a fitting according to one of the preceding Claims, **characterized in that** the tube socket (26) and the coupling member (28) are constructed in one piece as a plastics-material part.

5. A high-pressure hose with a fitting according to Claim 4, **characterized in that** the plastics-material part is an injection-moulded part injection-moulded around the end region of the high-pressure hose (10).

6. A high-pressure hose with a fitting according to Claim 5, **characterized in that** the core (12) or a hose sheathing (16) surrounding the braided hose fabric (14) or woven hose fabric is produced from the same plastics material as the injection-moulded part.

7. A high-pressure hose with a fitting according to Claim 5 or 6, **charactcrized in that** the end region of the high-pressure hose (10) comprises at least one lateral perforation in which the injection-moulded part engages.

8. A high-pressure hose with a fitting according to one of the preceding Claims, **characterized in that** at least one projection (41) is provided on the inside of the hose socket.

9. A high-pressure hose with a fitting according to one of the preceding Claims, **characterized in that** the fitting (20) comprises a resilient extension member (46: 48) insertable into the high-pressure hose (10) and widening the latter radially.

10. A high-pressure hose with a fitting according to Claim 9, **characterized in that** the extension member comprises a region widening in a conical manner.

11. A high-pressure hose with a fitting according to Claim 9 or 10, **characterized in that** the extension member is constructed in the form of a resilient ring (46) insertable into the high-pressure hose (10).

12. A high-pressure hose with a fitting according to Claim 9 or 10, **characterized in that** the extension member is constructed in the form of an extension sleeve (48) insertable into the high-pressure hose (10).

13. A high-pressure hose with a fitting according to one of Claims 4 to 12, **characterized in that** the fitting (20) comprises an anti-kink protection (43) of plastics material connected integrally to the hose socket.

## Revendications

1. Tuyau souple pour haute pression, équipé d'une ferrure de raccordement à un élément de raccord correspondant, où la ferrure comporte un élément de connexion pour établir une connexion avec le tuyau souple pour haute pression, et un élément d'accouplement pour établir une connexion à embout/douille avec l'élément de raccord, où l'élément de connexion est en forme de piquage tubulaire dans lequel s'enfonce une zone d'extrémité du tuyau pour haute pression, et la ferrure réalise un engagement positif avec le tuyau souple pour haute pression, et où le tuyau souple pour haute pression comporte une âme élastique de tuyau souple qui est entourée, pour recevoir des efforts de traction qui s'exercent sur le tuyau souple pour haute pression, par une tresse tubulaire ou un tricot tubulaire dans laquelle pénètre la ferrure, **caractérisé en ce que** l'angle de tresse de la tresse tubulaire (14) est d'environ 30° à 60°.

2. Tuyau souple pour haute pression équipé d'une ferrure selon la revendication 1, **caractérisé en ce que** l'élément d'accouplement (28) comporte un embout (30) de tuyau souple qui est élastiquement déformable en direction radiale, et **en ce que** l'âme (12) de tuyau souple du tuyau souple (10) à haute pression, dénudée de la tresse tubulaire ou du tricot tubulaire, est enfoncée dans l'embout (30) de tuyau souple.

3. Tuyau souple pour haute pression équipé d'une ferrure selon la revendication 1 ou 2, **caractérisé en ce qu'**un élément d'étanchéité (39) est agencé entre le tuyau souple (10) pour haute pression et la ferrure (20), dans une zone qui a été dénudée de la tresse tubulaire (14) ou du tissu tubulaire.

4. Tuyau souple pour haute pression équipé d'une ferrure selon l'une quelconque des revendications précédentes, **caractérisé en ce que** le piquage tubulaire (26) et l'élément d'accouplement (28) sont réalisés d'un seul tenant sous forme d'un élément en matière plastique.

5. Tuyau souple pour haute pression équipé d'une ferrure selon la revendication 4, **caractérisé en ce que** l'élément en matière plastique est une pièce moulée par injection, qui est surmoulée autour de la zone d'extrémité du tuyau souple (10) pour haute pression.

6. Tuyau souple pour haute pression équipé d'une ferrure selon la revendication 5, **caractérisé en ce que** l'âme (12) de tuyau souple, ou une gaine (16) de tuyau souple qui entoure la tresse tubulaire (14), ou le tissu tubulaire, sont fabriqués avec la même matière plastique que la pièce moulée par injection.

7. Tuyau souple pour haute pression équipé d'une ferrure selon la revendication 5 ou 6, **caractérisé en ce que** le tuyau souple (10) pour haute pression comporte, dans sa zone d'extrémité, au moins une découpure latérale dans laquelle pénètre la pièce moulée par injection.

8. Tuyau souple pour haute pression équipé d'une ferrure selon l'une quelconque des revendications précédentes, **caractérisé en ce qu'**au moins une saillie (41) est agencée sur le côté interne du piquage tubulaire

9. Tuyau souple pour haute pression équipé d'une ferrure selon l'une quelconque des revendications précédentes, **caractérisé en ce que** la ferrure (20) comprend un élément expansible élastique (46; 48) qui est insérable dans le tuyau souple (10) pour haute pression et l'élargit radialement.

10. Tuyau souple pour haute pression équipé d'une ferrure selon la revendication 9, **caractérisé en ce que** l'élément expansible comporte une zone qui s'élargit coniquement.

11. Tuyau souple pour haute pression équipé d'une ferrure selon la revendication 9 ou 10, **caractérisé en ce que** l'élément expansible consiste en une bague élastique (46) insérable dans le tuyau souple (10) pour haute pression.

12. Tuyau souple pour haute pression équipé d'une ferrure selon la revendication 9 ou 10, **caractérisé en ce que** l'élément expansible consiste en une douille expansible (48) insérable dans le tuyau souple (10) pour haute pression.

13. Tuyau souple pour haute pression équipé d'une ferrure selon l'une quelconque des revendications 4 à 12, **caractérisé en ce que** la ferrure comprend une protection (43) contre le croquage, en matière plastique, connectée d'un seul tenant avec le piquage tubulaire.
